Europäisches Patentamt

European Patent Office

Office européen des brevets

(19)

(11) EP 0 823 799 A2

(12) EUROPÄISCHE PATENTANMELDUNG

(43) Veröffentlichungstag:
11.02.1998 Patentblatt 1998/07

(51) Int. Cl.⁶: $H04J\ 3/06$, $H04L\ 25/49$

(21) Anmeldenummer: 97111619.9

(22) Anmeldetag: 09.07.1997

(84) Benannte Vertragsstaaten:
AT BE CH DE DK ES FI FR GB GR IE IT LI LU MC NL PT SE

(30) Priorität: 08.08.1996 DE 19632036

(71) Anmelder: ROBERT BOSCH GMBH
70442 Stuttgart (DE)

(72) Erfinder:
• Goeckler, Heinz, Prof. Dr.
  71522 Backnang (DE)
• Hallmann, Thomas
  70771 Leinfelden-Echterdingen (DE)
• Hildenbrand, Klaus, Dr.
  73663 Berglen (DE)

(54) **Verfahren und Aufbereitung von Abtastwerten**

(57) Für die Aufbereitung von im Zweierkomplement dargestellten Abtastwerten erfolgt ein Zweierkomplement-Abschneiden der niedrigwertigsten Bits (LSB). Anstelle der entfernten Bits (LSB) wird Synchroninformation s(k) hinzugefügt mit einem von der Quantisierungsstufe abhängigen Mittelwert. Für diese Synchroninformation dürfen keine dominanten Spektrallinien für Frequenzen f>0 in das Nutzspektrum fallen.

Durch diese Maßnahme können Fehler, die durch das Entfernen der niedrigwertigsten Bits und durch die Einfügung der Synchroninformation entstehen, weitgehend kompensiert werden.

FIG.1

EP 0 823 799 A2

## Beschreibung

Die Erfindung betrifft ein verfahren zur Aufbereitung von im Zweierkomplement dargestellten Abtastwerten, insbesondere für Übertragungszwecke.

Stand der Technik

Aus der DE 44 15 288 A1 ist ein Verfahren zur Aufbereitung von Daten, insbesondere von digitalisierten Fernsehkanalsignalen oder Fernsehsignalbündeln bekannt. Dort werden Daten, die als parallele Teildatenströme unterschiedlicher Bitwertigkeit vorliegen, bezüglich des Teildatenstromes mit niedrigster Bitwertigkeit periodisch durch eine Rahmenkennung ersetzt. Es wird also Nutzinformation, die keinen wesentlichen Informationsgehalt aufweist, zugunsten von Zusatzinformation zerstört. Durch diese Aufbereitung können genormte Datenraten voll ausgenutzt werden, da für die Synchroninformation, insbesondere eine Rahmenkennung, kein zusätzlicher Übertragungsaufwand benötigt wird.

Dieses Verfahren gestattet die Verwendung einfacher Multiplexer und Demultiplexer, da für die Synchroninformation kein Überrahmen zu bilden ist.

Vorteile der Erfindung

Mit den Maßnahmen des Patentanspruchs 1 ist es möglich, ohne merklichen Qualitätsverlust Synchroninformation zusätzlich zu übertragen. Durch die aufgezeigten Vorgaben für die hinzugefügte Synchroninformation werden Störungen minimal, ohne daß der Schaltungsaufwand zunimmt oder daß besondere Fehlerkompensationsmaßnahmen zu treffen sind.

Die weiteren Aßsprüche zeigen Weiterbildungen des Verfahrens, insbesondere für vorteilhafte Anwendungen auf.

Der Erfindung liegen folgende Erkenntnisse zugrunde:

Durch die Entfernung eines niedrigwertigen Bits (LSB) aus dem Nutzsignal entsteht ein zufälliger Fehler mit einem etwa weißen Rauschspektrum. Je nachdem wie die Entfernung des LSB vorgenommen wird, entsteht ein mehr oder weniger großer Gleichanteil des Fehlers. Dieser Gleichanteil kann sich störend auswirken, wenn er sich mit anderen in einem Gesamtsystem erzeugten Gleichanteilen zu größeren Werten aufsummiert, oder wenn er spektralmäßig mitten in das Nutzband fällt. Durch den erfindungsgemäßen Aufbau der Synchroninformation wird der Gleichsignal-Fehleranteil vollständig eliminiert. Die durch die Synchroninformation hinzukommenden Störlinien im Frequenzspektrum dürfen sogar in das Nutzspektrum fallen, ohne daß ein geforderter Fremdsignalabstand überschritten wird. Es ist lediglich darauf zu achten, daß keine dominanten Spektrallinien in das Nutzspektrum fallen. Das Verfahren nach der Erfindung weist alle Vorteile des Verfahrens gemäß DE 44 15 288 A1 auf mit dem zusätzlichen Vorteil, daß die hinzugefügte Synchroninformation/Rahmenkennung keine oder im Vergleich zum Stand der Technik geringere zusätzliche Störungen verursacht.

Zeichnung

Anhand der Zeichnungen werden Ausführungsbeispiele der Erfindung erläutert. Es zeigen

Figur 1 eine Prinzipdarstellung zum Entfernen des LSB und zur Hinzufügung von Synchroninformation,

Figur 2 ein Fehlermodell der Quantisierung Q für die Entfernung des LSB und der hinzugefügten Synchroninformation,

Figur 3 die entsprechende Darstellung im Frequenzbereich,

Figur 4 und Figur 5 Beispiele für Synchronsignale nach der Erfindung,

Figur 6 ein Blockschaltbild für ein Zeitmultiplex-Übertragungssystem von UKW-FM-Signalen mit erfindungsgemäß eingefügter Synchroninformation.

Beschreibung von Ausführungsbeispielen

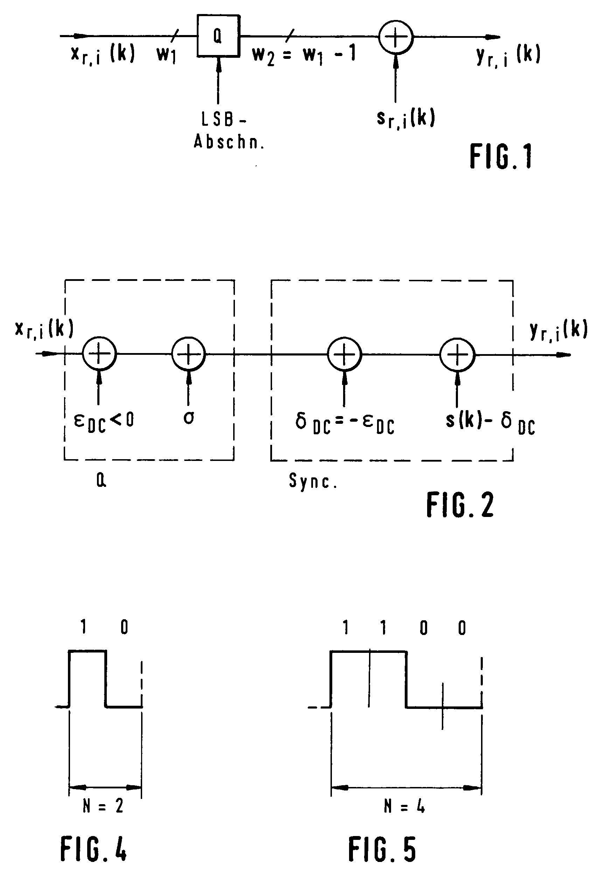

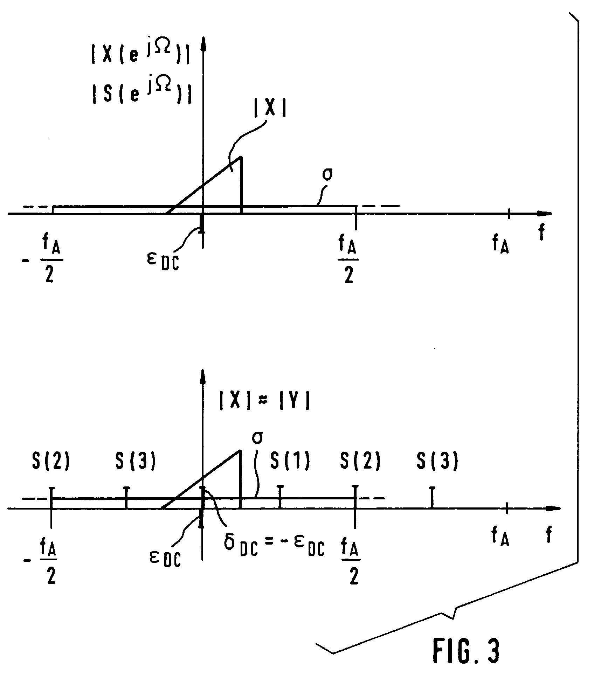

Figur 1 zeigt in einer Prinzipdarstellung wie aus eingangsseitigen Abtastwerten $x_{r,i}(k)$ niedrigwertige Bits (LSB) entfernt werden und an deren Stelle Synchroninformation $s_{r,i}(k)$, z. B. eine Rahmenkennung, hinzugefügt wird, so daß ein Ausgangssignal $y_{r,i}(k)$ entsteht. Die Erfindung gibt nun an, wie die Synchroninformation $s_{r,i}(k) = s(k)$ aufgebaut sein muß, damit die Störung von $y(k)$ bezogen auf $x(k)$ minimal wird.

Die Indizes r und i stehen jeweils für den Real- bzw. Imaginärteil bei komplex aufbereiteten Abtastwerten; d. h. Abtastwerten, die insbesondere durch Mischung mit einem komplexen Träger entstanden sind.

Die Abtastwerte x(k), d. h. die Nutzsignalanteile, sind bei der Erfindung im Zweierkomplement dargestellt. Eine solche Darstellung für digitale Signale ist beispielsweise im „Handbook for Digital Signal Processing"; Sanjit K. Mitra, James F. Kaiser; Verlag John Wiley & Sons, New York; Seiten 338 bis 341 beschrieben. Die Entfernung des LSB erfolgt durch Zweierkomplement-Abschneiden und zwar bezüglich der niedrigwertigsten Stelle. Das Zweierkomplement-Abschneiden ist in der DE 44 40 508 A1 beschrieben allerdings dort für die Entfernung der oberen Bits und nicht für das LSB. Durch das Zweierkomplement-Abschneiden des LSB reduziert sich die Wortlange $w = w_1$ eines Abtastwertes auf $w_2 = w_1 - 1$. Das Zweierkomplement-Abschneiden erfolgt ohne zusätzliche Maßnahmen zur Verminderung des dadurch entstehenden

$$DC\text{(Gleich-)Anteils } \varepsilon_{DC} = -\frac{1}{2}(q_2 - q_1),$$

wobei $q_1 = 2^{-(w_1-1)}$ die Quantisierungsstufe des Eingangssignals x(k) vor der Entfernung des LSB ist (Wortlänge w1) und $q_2 = 2^{-(w_2-1)}$ die Quantisierungsstufe nach Entfernung des LSB ist (Wortlänge $w_2 = w_1 - 1$), also $q_2 = 2q_1$.

Die hinzugefügte Synchroninformation s(k) weist erfindungsgemäß den Mittelwert (Gleichanteil) der Größe

$$\delta_{DC} = \overline{s(k)} = \frac{1}{2}(q2-q1) = \varepsilon_{DC}$$

auf, der den DC-Fehleranteil der LSB-Entfernung kompensiert. Bei Verwendung komplex aufbereiteter Abtastwerte kann die Synchroninformation dem Real- und/oder Imaginärteil hinzugefügt werden. Die hinzugefügte Synchroninformation s(k) ist periodisch derart, daß dominante Spektrallinien des Signalspektrums

$$S(n) = q1 * \frac{1}{N} \sum_{k=0}^{N-1} s(k)e^{-j\frac{2\pi}{N}kn}$$

außerhalb des Nutzspektrums liegen, wobei $S(0) = \delta_{DC}$ und N die Periodenlänge der Bitfolge s(k) ist; d. h. $s(k-N) = s(k)$.

Das niedrigwertigste Bit LSB wird somit erfindungsgemäß durch eine 1-Bit Synchroninformation s(k) ersetzt, wobei q2=2q1 ist. Die Signalperiode der Synchroninformation der geraden Länge N ist vorzugsweise von der Form $s(k) = q1 \ (a_1, a_2, a_3, ... a_N)$, wobei $a_i \in \{0,1\}$ für alle $i \in N$ gilt und wobei die Signalperiode gleichviele Nullwerte ($a_i = 0$) und Einswerte ($a_i = 1$) enthält, nämlich jeweils N/2.

Figur 2 zeigt ein Fehlermodell der Quantisierung Q für die Entfernung des LSB und der hinzugefügten Synchroninformation s(k) im Zeitbereich, wobei σ die Standardabweichung des durch die LSB Entfernung auftretenden zufälligen Fehlers kennzeichnet.

Figur 3 zeigt die entsprechende Darstellung im Frequenzbereich mit der Periodenlänge N = 4 für die Synchroninformation. Wie aus Figur 3 hervorgeht, fallen alle Spektrallinien außer $S(0) = \delta_{DC}$ außerhalb des Nutzspektralbereichs |X|bzw.|Y|. Mit $f_A$ ist in Figur 3 die Abtastfrequenz bei der Erzeugung der Abtastwerte bezeichnet.

Für den DC-Anteil $\varepsilon_{DC}$ gilt:

$$\varepsilon_{DC} = \frac{1}{2}(q2-q1) = -\frac{1}{2}q1$$

Nachfolgend werden Beispiele für Synchronsignale s(k) vorgestellt, die den zuvor dargestellten Bedingungen (Fehlerkompensation des Gleichanteils) genügen. Das in Figur 4 dargestellte Signal ist eine 10 Folge mit der Periodenlänge N = 2, wobei gilt:

$$\frac{1}{q1} * s(k) : ... 1, 0, ...; s(0) = 1, s(1) = 0$$

und für die Spektrallinien:

$$S(0) = \frac{q1}{2} = S(1).$$

Das Synchronsignal gemäß Figur 5 weist eine Periodenlänge N = 4 auf und besteht aus der Folge 1100 mit:

$$s(0) = s(1) = q1;\ s(2) = s(3) = 0$$

und

$$S(0) = \frac{q1}{2} = \delta_{DC} = -\varepsilon_{DC}.$$

$$S(1) = \frac{q1}{4}(1-j);\ |S(1)| = \frac{q1}{2\sqrt{2}}$$

$$S(2) = 0$$

$$S(3) = S(1) = \frac{q1}{4}(1+j)$$

$$|S(3)| = \frac{q1}{2\sqrt{2}}$$

Für eine weitere Folge eines Synchronsignals nach der Erfindung gilt:

$$s(0) = s(1) = s(2) = q_1$$

$$s(3) = s(4) = s(5) = 0,\ N = 6,\ \delta_{DC} = \frac{q1}{2}$$

oder

$$s(0) = s(1) = s(3) = q_1,$$

$$s(2) = s(4) = s(5) = 0,$$

$$\delta_{DC} = \frac{q1}{2}.$$

Wesentlich bezüglich des Realisierungsaufwandes ist die Tatsache, daß das Synchronsignal nach der Auswertung auf der Empfangsseite nicht wieder durch ein anderes - besseres - Signal ersetzt werden muß, da das Synchronsignal ja gerade so gewählt wurde, daß es für die Gesamtsystemeigenschaften optimal ist.

Nachdem jetzt festliegt, wie auf optimale Weise die Synchroninformation hinzugefügt wird (mit minimaler Degradation), ist nun zu prüfen, wieviel Restdegradation dennoch übrigbleibt.

Für die Varianz des Fehlers $\sigma^2$ aufgrund des Entfernens des LSB ergibt sich für das Zweierkomplement ES

$(q_2 = 2q_1)$ :

$$\sigma^2 = \frac{1}{12}(q_2{}^2 - q_1{}^2)$$

$$= \frac{1}{12}(q_2 - q_1)(q_2 + q_1)$$

$$= \frac{q_1{}^2}{12}(\frac{q2}{q1} - 1)(\frac{q2}{q1} + 1) = \frac{q_1{}^2}{4}$$

Offensichtlich ist die Varianz = Leistung des Fehlers

$$\sigma^2 = \frac{q_1{}^2}{4} = \varepsilon^2{}_{DC}$$

gleich der Leistung des DC-Fehleranteils; letzterer wird aber durch die erfindungsgemäße Ausbildung des Synchronsignals vollständig eliminiert.

Die nach der Erfindung aufbereitete Synchroninformation kann vorteilhaft für ein Übertragungssystem mit digitalisierten Fernsehkanalsignalen oder Fernsehkanalsignalbündeln eingesetzt werden, beispielsweise für das in der DE 44 15 288 A1 vorgestellte Übertragungssystem.

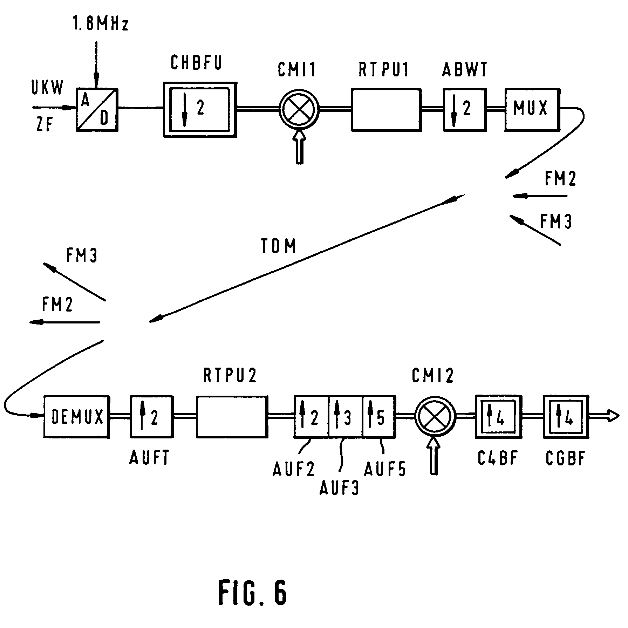

Nachfolgend wird der Einsatz der Erfindung in einem Zeitmultiplex-Übertragungssystem von UKW-FM-Signalen vorgestellt. Das Blockschaltbild für dieses Übertragungssystem zeigt Figur 6. Die in ZF-Lage angelieferten UKW-Signal werden mit der Abtastfrequenz $f_A$ = 1,8 MHz abgetastet und digitalisiert. Dieser Vorgang ist im Blockschaltbild durch einen A/D-Wandler dargestellt. Es schließt sich ein Halbbandfilter CHBFU mit Abtastratenwandlung (Reduzierung der Abtastrate um den Faktor 2) an, das die Umwandlung eines reellen Eingangssignals in ein komplexes Ausgangssignal gestattet. Ein solches Halbbandfilter ist beispielsweise der EP 250 926 A2 zu entnehmen. Die Filterlänge N wird vorteilhaft N = 27 gewählt. Es folgt ein Mischer CMI1 für komplexe Signale zur Herabmischung der zwischenfrequenten Signale und ein nachgeschaltetes Filter RTPU1 zur Nachbarkanalselektion, das gleichzeitig als Aptialiasingfilter dient. Wegen der nachfolgenden Abwartsabtastung ABWT um den Faktor 2 muß die Nachbarkanalselektion vollständig hier vorgenommen werden, da der Nachbarkanal nicht bei

$$\frac{f_A}{2} = 471 \text{ kHz}$$

zentriert ist. Als Filterlänge wird hier N = 59 gewählt. Im sich anschließenden Multiplexer MUX wird das LSB durch die Synchroninformation s(k) ersetzt wie zuvor geschildert. In diesem Multiplexer erfolgt auch die Verschachtelung der Realteile und Imaginärteile des komplex aufbereiteten Signals für die Übertragung. Der prinzipielle Aufbau eines solchen Multiplexers geht aus der DE 44 15 288 A1 hervor. Zusammen mit anderen FM-Kanälen FM2, FM3,... erfolgt die Übertragung nach dem Zeitmultiplexverfahren, beispielsweise über einen Lichtwellenleiter nach entsprechender Aufbereitung.

Empfangsseitig erfolgt eine entsprechende Signalverarbeitung mit einem Demulitplexer DEMUX und einem Aufwärtsabtaster AUFT. Wegen der vorangegangenen Aufwärtsabtastung ist ein Antiimaging-Filter RTPU2 vorgesehen. Hierzu eignet sich wiederum ein Halbbandfilter, beispielsweise gemäß WO 88/06381 A1 (komplexes Eingangssignal - komplexes Ausgangssignal). Die nachfolgenden Aufwärtsabtaster AUF2, AUF3, AUF5, der komplexe Mischer CMI2 sowie die komplexen Halbbandfilter C4BF und CGBF mit Abtastratenwandlung (jeweils Faktor 4) dienen zur geeigneten Signalweiterverarbeitung. Speziell arbeitet der komplexe Mischer CMI2 mit einer Abtastfrequenz von 28 MHz und kanalspezifischer Mischerfrequenz, was zu einer erhöhten Abtastfrequenz des Ausgangssignals des Übertragungssystems von 432 MHz führt.

Aufgrund einer Fehleranalyse dieses Übertragungssystems (Fig. 6) ergibt sich eine Gesamtquantisierungsrauschleistung von

$$N = 2^{-25}$$

Durch die Abtastratenverminderung des Systems gemäß Fig. 6 entstehen zusäzliche spektrale Überfaltungsanteile im Halbbandfilter CHBFU und im Abwärtsabtaster ABWT. Das resultierende Signal-/Rauschverhältnis beträgt daher bei Vollaussteuerung 71,5 dB und bei Halbaussteuerung 68 dB. Mit diesen Werten ist für Fremdsignalpegel eine ausreichende Reserve vorhanden. Zu dem vorliegenden Beispiel mit $w_1$ = 15 Bit erhöht sich die Quantisierungsrauschleistung durch Hinzufugen der Synchroninformation lediglich um

$$\Delta N = \frac{1}{3} 2^{-28},$$

wodurch die obigen Signal/Rauschverhältnisse in guter Näherung unverändert bleiben. Der Gleichanteilsfehler ist ja erfindungsgemäß ohnehin vollständig eliminiert. Es ist daher möglich, die Periodenlänge sehr viel größer als 2 zu wählen, so daß die Mehrzahl der Spektrallinien mit Ausnahme der dominanten Spektrallinien in den Nutzsignalbereich fallen.

Wie zuvor erwähnt, kann die Synchroninformation dem Realteil oder Imaginärteil des komplexen Signals $\underline{x}(kT)$ oder beiden Signalkomponenten hinzugefügt werden. In letzterem Fall können die hinzugefügten Synchronsignale identisch sein: $s_r(k) = s_i(k) = s(k)$, wobei k ganzzahlig ist.

Die hinzugefügten Synchronsignale können auch gleich und relativ zueinander zeitversetzt (phasenverschoben) sein: $s_r(k-k_0) = s_i(k)$ für $k_0 \neq 0$ oder verschieden sein: $s_r(k) \neq s_i(k-k_0)$ für alle $k_0$.

Fur die vorangestellten Überlegungen wurde beispielhaft davon ausgegangen, daß Real- und Imaginärteil mit den gleichen Synchronfolgen ergänzt werden, die bei Bedarf gegeneinander zeitversetzt sein können.

Wenn nach der Erfindung aufbereitete Signal im Zeitmultiplex miteinander übertragen werden, wie bei dem zuvor beschriebenen Übertragungssystem für UKW-FM-Signale, wobei diese Signale selbst reell- oder komplexwertig sein können, können vorgenannte Maßnahmen für die einzelnen Zeitmultiplexkomponenten ebenfalls oder nur teilweise angewendet werden.

## Patentansprüche

1.  Verfahren zur Aufbereitung von im Zweierkomplement dargestellten Abtastwerten, insbesondere für Übertragungszwecke mit folgenden Merkmalen:

    -   durch Zweierkomplement-Abschneiden werden die niedrigwertigsten Bits (LSB) entfernt,
    -   anstelle der entfernten niedrigwertigsten Bits wird Synchroninformation s(k) hinzugefügt mit folgenden Eigenschaften:

        -   der Mittelwert der Synchroninformation wird im wesentlichen gewählt zu

        $$\overline{s(k)} = \frac{1}{2}(q2-q1),$$

        wobei $q_1$ die Quantisierungsstufe der Abtastwerte vor dem Abschneiden und $q_2$ die Quantisierungsstufe nach dem Abschneiden angibt,
        -   die hinzugefügte Synchroninformation s(k) ist periodisch, wobei dominante Spektrallinien für Frequenzen f>0 außerhalb des Nutzspektrums liegen.

2.  Verfahren nach Anspruch 1, dadurch gekennzeichnet, daß das niedrigstwertige Bit (LSB) durch eine 1-Bit Synchroninformation s(k) ersetzt wird, wobei $q_2 = 2q_1$ ist.

3.  Verfahren nach Anspruch 1 oder 2, dadurch gekennzeichnet, daß eine Signalperiode der Synchroninformation von der Form $s(k) = q_1(a_1, a_2, a_3, ..., a_N)$ gewählt wird, wobei $a_i \in \{0,1\}$ für alle $i \in [1,N]$ gilt und wobei die Signalperiode gleichviele Nullwerte ($a_i = 0$) und Einswerte ($a_i = 1$) enthält.

4.  Verfahren nach einem der Ansprüche 1 bis 3, dadurch gekennzeichnet, daß bei komplex aufbereiteten Abtastwerten die Synchroninformation s(k) dem Realteil und/oder dem Imaginärteil hinzugefügt wird.

5.  Verfahren nach Anspruch 4, dadurch gekennzeichnet, daß die Synchroninformation s(k), bezüglich Realteil und Imaginärteil zeitlich versetzt hinzugefügt wird.

6.  Verfahren nach Anspruch 4 oder 5, dadurch gekennzeichnet, daß die Synchroninformation s(k), die dem Realteil und dem Imaginärteil hinzugefügt wird, identisch oder verschieden voneinander ist.

7.  Verfahren nach einem der Ansprüche 1 bis 6 für die Verwendung in einem Übertragungssystem mit digitalisierten Fernsehkanalsignalen oder Fernsehkanalsignalbündeln.

8.  Verfahren nach einem der Ansprüche 1 bis 6 für die Verwendung in einem Zeitmultiplex-Übertragungssystem von UKW-FM-Signalen.

9.  Verfahren nach Anspruch 8, dadurch gekennzeichnet, daß das Zweierkomplement-Abschneiden und das Hinzufügen der Synchroninformation s(k) bei der Zeitmultiplex-Zusammenfassung der einzelnen UKW-FM-Signale vorgenommen wird.

$x_{r,i}(k)$  $w_1$  [ Q ]  $w_2 = w_1 - 1$  $\oplus$  $y_{r,i}(k)$

LSB-
Abschn.

$s_{r,i}(k)$

**FIG.1**

$x_{r,i}(k)$  $\oplus$  $\oplus$  $\oplus$  $\oplus$  $y_{r,i}(k)$

$\varepsilon_{DC} < 0$  $\sigma$  $\delta_{DC} = -\varepsilon_{DC}$  $s(k) - \delta_{DC}$

Q  Sync.

**FIG.2**

1  0

$N = 2$

**FIG.4**

1  1  0  0

$N = 4$

**FIG.5**

FIG. 3

FIG. 6